# EUROPÄISCHE PATENTSCHRIFT

(11) **EP 0 508 259 B1**
(45) Veröffentlichungstag und Bekanntmachung des Hinweises auf die Patenterteilung: **05.06.1996**
(21) Anmeldenummer: 92105445.8
(22) Anmeldetag: 30.03.1992
(51) Int. Cl.: C09J 175/04, C09J 5/06, C08G 18/32

(54) **Einkomponenten-Reaktivklebstoffe auf Polyurethanbasis**
Reactive adhesive in one compound based upon polyurethane
Adhésif réactif à une composante à base de polyuréthane

(30) Priorität: 10.04.1991 DE 4111655
(43) Veröffentlichungstag der Anmeldung: 14.10.1992
(73) Patentinhaber: BAYER AG, 51368 Leverkusen (DE)
(72) Erfinder: Stepanski, Horst, Dr., W-5090 Leverkusen 3 (DE); Colinas-Martinez, José, W-5632 Wermelskirchen (DE); Kopp, Richard, Dr., W-5000 Köln 80 (DE); Hess, Heinrich, Dr., W-5000 Köln 80 (DE); Grögler, Gerhard, Dr., W-5090 Leverkusen 1 (DE)

(56) Entgegenhaltungen:
- DE-A- 3 325 735
- DE-A- 3 919 696

## Beschreibung

Die Erfindung betrifft Polyurethanreaktivmassen und ihre Verwendung als Eintopfklebstoffsysteme.

Heißhärtbare Einkomponenten-Reaktivklebstoffe auf der Basis von durch Polyaddukt-Umhüllung stabilisierten, festen, feinverteilten Polyisocyanaten und mit Isocyanaten reaktionsfähigen Verbindungen wie Polyolen und Polyaminen sind hinreichend bekannt (siehe z.B. DE-A-31 12 054, 32 28 723, 34 03 499, 39 19 697 und 39 19 696 und in Houben-Weyl, Methoden der organischen Chemie, Band 20/2, S. 1651-1655 und 1723-1724.

Ein Problem bei der Verarbeitung heißhärtbarer nach dem Umhüllungsprinzip stabilisierter Einkomponenten-Polyurethan-Klebstoffe lag bisher darin, daß diese nur durch Zufuhr äußerer Wärme zur Verfestigung zu bringen waren. Die Wärmeeinwirkung durch die jeweils benutzten Heizaggregate muß dabei solange aufrechterhalten werden bis der Klebstoff völlig durchgehärtet ist. Der Energie- und Zeitaufwand hierfür ist vor allem deshalb relativ hoch, weil zusätzlich zum Klebstoff auch die Fügeteile mit aufgeheizt werden müssen. Wärmeübertragungsprobleme gibt es vor allem bei Kunststoffteilen, insbesondere, wenn sie geschäumt vorliegen. Zudem ist bei längeren Verweilzeiten in der Hitze ein Verzug, eine Verformung oder sogar eine thermische Zersetzung empfindlicher Kunststoff-Teile zu befürchten.

Es stellte sich also die Aufgabe, mittels geeigneter Methoden unabhängig von den Wärmeübertragungseigenschaften der Fügeteile selektiv den Klebstoff zu erwärmen. Insbesondere bei wenig polaren Fügeteilmaterialien kommt hier prinzipiell die dielektrische Erwärmung mittels Mikrowellen (z.B. 2450 Hz) oder elektrischem Hochfrequenzfeld (z.B. 27,12 MHz) in Frage.

Entsprechende Versuche zeigten jedoch, daß Klebstoffe gemäß DE 3 919 697 und DE 3 919 696 sich zwar prinzipiell gut dielektrisch erwärmen lassen, nach Aktivierung der chemischen Vernetzung jedoch zu schwer kontrollierbarer Überhitzung und Zersetzung führen. Dabei werden zusätzliche polare Gruppen gebildet. Der dielektrische Verlustwert erhöht sich dadurch zunehmend, so daß der Erwärmungsprozeß vollends instabil und der Klebstoff zerstört wird. Reduziert man die Feldstärke auf ein unkritisches Maß, tritt sehr unvollständige oder gar keine Verfestigung ein.

Weiterhin werden in der DE-A 3325735 flüssige, lagerstabile, wärmeaktivierbare Stoffgemische aus Polyolen und/oder Polyamiden sowie aus Polyisocyanaten beschrieben, die für die Verwendung als Haftkleber geeignet sind. Es findet sich kein Hinweis darauf, daß die beanspruchten nicht-aromatischen Polyamine besonders geeignet zur Herstellung von Einkomponenten-Reaktivklebstoffe auf Polyurethanbasis sind. Das in den Beispielen des angeführten Dokumentes eingesetzte Polyamidamin auf Basis von dimerer Leinölfettsäure und Triamin ist jedenfalls nicht geeignet für einen Reaktivklebstoff mit ausgezeichneten Klebeigenschaften.

Aufgabe der vorliegenden Erfindung war es daher, Einkomponenten-PUR-Klebstoff-Formulierungen zu finden, die die eben genannten Nachteile umgehen und durch dielektrische Erwärmung problemlos aushärtbar sind.

Gegenstand der Erfindung sind Reaktivklebstoffe auf Polyurethanbasis enthaltend jeweils wenigstens ein stabilisiertes Polyisocyanat A ausgewählt aus der Gruppe 1,5-Naphthalin-diisocyanat, dimeres 4,4'-Diisocyanatodiphenylmethan, dimeres 2,4-Diisocyanatotoluol, 3,3'-Diisocyanato-4,4'-dimethyl-N,N'-diphenylharnstoff und N,N'-Bis-[4-(4- oder 2-isocyanatophenylmethyl)-phenyl]-harnstoff, wenigstens ein Polyol B, das mindestens zwei Hydroxylgruppen aufweist und aus der Gruppe Polyester, Polyether, Polythioether, Polyacetale, Polycarbonate, Polyesteramide, Rizinusöl, Kohlenhydrate, Stärke, hochmolekulare Polyhydroxylverbindungen enthaltend Polyaddukte aus Formaldehyd, Phenolen und/oder Aminen oder Umsetzungsprodukte von Polyisocyanaten und aminofunktionellen Verbindungen oder Vinylpolymerisate ausgewählt ist, und wenigstens ein nicht-aromatisches Polyamin C ausgewählt aus der Gruppe Ethylendiamin, 1-Amino-3,3,5-trimethyl-5-aminomethyl-cyclohexan, 3,3'-Dimethyl-4,4'-diaminodicyclohexylmethan, Diethylentriamin, Methylnonandiamin, Polyoxypropylenethertriamin vom mittleren Molekulargewicht 403, sowie gegebenenfalls übliche Zusatzstoffe, dadurch gekennzeichnet, daß der zahlenmäßige Mittelwert des Äquivalentgewichts aller beteiligten Polyole und Polyamine mindestens 500 beträgt.

Die Polyisocyanate werden durch Einwirkung von aliphatischen Polyaminen aus der Stoffgruppe c stabilisiert. Derartige Polyamine sind : Ethylendiamin, 1-Amino-3,3,5-trimethyl-5-aminomethyl-cyclohexan, 3,3'-Dimethyl-4,4'-diaminodicyclohexylmethan, Diethylentriamin, Methylnonandiamin, Polyoxypropylenethertriamin vom mittleren Molekulargewicht 403.

Als Stabilisatoren kommen z.B. ferner in Frage: Hydrazin, zumeist in Form von Hydrazinhydrat, C₁-C₆-alkylsubstituierte Hydrazine, z.B. Methylhydrazin, Ethylhydrazin, Hydroxyethyl-hydrazin oder N,N'-Dimethylhydrazin, Verbindungen mit Hydrazid-Endgruppen wie z.B. Carbodihydrazid, Ethylen-bis-carbazinester, β-Semicarbazido-propionsäurehydrazid oder Isophoron-bis-semicarbazid. Weitere Desaktivierungsmittel sind in DE-A-3 230 757 und 3 112 054 sowie EP-A-103 325 und 62 780 aufgezählt.

Als Stabilisatoren für die Isocyanatkomponente kennen auch offenkettige, mono- oder bicyclische Amidine bzw. Guanidine, welche keine gegenüber Isocyanaten reaktiven Wasserstoffatome aufweisen, verwendet werden. Als Beispiele für derartige Verbindungen seien genannt: Tetramethylguanidin, Pentamethylguanidin; 1,2-Dimethyl-tetrahydropyrimidin, 1,8-Diaza-bicyclo[5,4,0]-undec-7-en, 1,5-Diaza-bicyclo[4,3,0]non-5-en. Weitere Beispiele für derartige Amidine sind in der DE-A-3 403 500 aufgeführt.

Bevorzugte Polyole B sind solche, die 2 bis 4 Hydroxylgruppen und in der Regel ein Molekulargewicht von 400-8000 besitzen. Beispiele hierfür sind z.B. ausführlich in der DE-OS 2 920 501, DE-OS 2 854 384 und der DE-OS 3 230 757 aufgeführt.

Durch Vinylpolymerisate modifizierte Polyhydroxylverbindungen, wie sie z.B. durch Polymerisation von Styrol und Acrylnitril in Gegenwart von Polyethern oder Polycarbonatpolyolen erhalten werden, sind für das erfindungsgemäße Verfahren geeignet.

Vertreter der erfindungsgemäß zu verwendenden Polyole B sind z.B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44 und 54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45 bis 71, und in der DE-OS 2 854 384 und 2 920 501 beschrieben.

Selbstverständlich können Mischungen der obengenannten Polyole mit mindestens zwei gegenüber Isocyanaten reaktionsfähigen Wasserstoffatomen, z.B. Mischungen von Polyethern und Polyestern, eingesetzt werden.

Als zusätzliche Polyole kommen auch niedermolekulare Kettenverlängerer oder Vernetzer in Frage. Bei diesen Kettenverlängerern oder Vernetzern handelt es sich insbesondere um mindestens zweifunktionelle Verbindungen, welche an aliphatische und/oder cycloaliphatische Gruppen gebundene Hydroxylgruppen und Molekulargewichte zwischen 62 und 399 aufweisen. Bevorzugt sind dabei niedermolekulare Diole und Triole mit an aliphatische oder cycloaliphatische Gruppen gebundenen Hydroxylgruppen des Molekulargewichtsbereichs 62 bis 399.

Diese Verbindungen weisen in der Regel 2 bis 8, vorzugsweise 2 bis 4, besonders bevorzugt jedoch 2 bis 3, Hydroxylgruppen auf. Es können selbstverständlich auch Mischungen von verschiedenen Verbindungen verwendet werden. Als Beispiele für derartige Verbindungen seien genannt:
Ethylenglykol, Diethylenglykol, Triethylenglykol, Tetraethylenglykol, Trimethylenglykol, Butandiol-2,3 und/oder -1,4, Pentandiol-1,5, Hexandiol-1,6, Neopentylglykol, 1,4-Bis-hydroxyethyl-cyclohexan, 1,4-Dihydroxycyclohexan, Terephthalsäure-bis(β-hydroxyethyl)ester, 1,4,3,6-Dianhydrohexite, 1,4-Monoanhydrotetrite, Propylenglykol, Dipropylenglykol, Tripropylenglykol, Tetrapropylenglykol, Bis-2-hydroxyethyl-hydrochinon, Bis-(2-hydroxyethyl)-resorcin. Als mehrwertige Verbindungen seien genannt: Trimethylolpropan, Trimethylolethan, Hexantriol-1,2,6, Glycerin, Pentaerythrit, Chinit, Mannit, Sorbit, Rizinusöl sowie Formose oder Formit.

Ferner sind geeignet tertiaraminhaltige Di- oder Polyole, z.B. N-Methyldiethanolamin, Triethanolamin oder N,N'-Bis-hydroxyethylpiperazin.

Es sind auch Diole mit zusätzlichen Gruppen einsetzbar, z.B. Adipinsäure-bis-(2-hydroxyethyl)-ester, Terephthalsäure-bis-(2-hydroxyethyl)-ester, Diol-urethane, Diolharnstoffe oder Polyole, welche Sulfonat-und/oder Phosphonatgruppen enthalten, z.B. 1,6-Hexamethylen-bis-(2-hydroxyethylurethan), 4,4'-Diphenylmethan-bis-(2-hydroxyethylharnstoff) oder das Addukt von Na-Bisulfit an Butandiol-1,4, bzw. dessen Alkoxylierungsprodukte. Weitere niedermolekulare Verbindungen werden ausführlich in der DE-A 2 854 384 beschrieben.

Die obengenannten nieder- und höhermolekularen Polyole können gegebenenfalls durch Vorreaktion mit einem Unterschuß Polyisocyanat modifiziert sein.

Als Polyisocyanate kommen hierfür aliphatische, cycloaliphatische, araliphatische, aromatische und/oder heterocyclische Polyisocyanate in Betracht, wie sie z.B. in der DE-OS 2 920 501 (S. 12 bis 16) aufgeführt sind.

Besonders bevorzugt werden in der Regel die technisch leicht zugänglichen Polyisocyanate, z. B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI"), 4,4'- und/oder 2,4'-Diphenylmethan-diisocyanat, 1,6-Hexamethylendiisocyanat, 1-Isocyanato-3,3,5-trimethyl-5-isocyanatomethyl-cyclohexan, Perhydro-2,4'-und/oder -4,4'-diphenylmethan-diisocyanat.

Die Herstellung der gegebenenfalls für die Stabilizierung der Polyisocyanate A verwendbaren höhermolekularen aliphatischen Polyetheramine erfolgt bei spielsweise durch die reduktive Aminierung von Polyoxyalkylenglykolen mit Ammoniak nach BE-PS 634 741 und US-PS 3 654 370. Weitere höhermolekulare Polyoxyalkylen-Polyamine können nach Methoden, wie sie in der Firmenschrift "Jeffamine, Polyoxypropylene Amines" von Texaco Chemical Co., 1978, aufgezählt werden, hergestellt werden, beispielsweise durch Hydrierung von cyanethylierten Polyoxypropylenglykolen (DE-A-1 193 671), durch Aminierung von Polypropylenglykolsulfonsäureestern (US-PS 3 236 895), durch Behandlung eines Polyoxyalkylenglykols mit Epichlorhydrin und einem primären Amin (FR-PS 1 466 708) oder durch Umsetzung von NCO-Prepolymeren mit Hydroxylgruppen aufweisenden Enaminen, Aldiminen oder Ketiminen und anschließende Hydrolyse gemäß DE-A-2 546 536. Geeignete höhermolekulare aliphatische Di- und Polyamine sind auch die nach DE-A-29 48 419, DE-A-3 039 600, DE-A-3 112 118, der EP-A-61 627, EP-A-71 132 und EP-A-71 139 durch alkalische Hydrolyse von NCO-Prepolymeren (mit aliphatischen Diisocyanaten) mit Basen über die Carbamatstufe zugänglichen Polyamine.

Zusätzlich können niedermolekulare Kettenverlängerer verwendet werden, insbesondere niedermolare aromatische Diamine des Molekulargewichtsbereiches 108 bis 399, die die Aminogruppen auch an heterocyclischen Resten mit aromatischem Charakter gebunden enthalten können.

Als aromatische Polyamine sind z.B. geeignet: p-Phenylendiamin, 2,4-/2,6-Toluylendiamine, Diphenylmethan-4,4'- und/oder -2,4'- und/oder -2;2'-diamine, 3,3'-Dichlor-4,4'-diaminodiphenylmethan, 3-(C₁-C₈-)-Alkyl-4,4'-diaminodiphenylmethane, die 3,3'-Di-(C₁-C₄)-4,4'-diaminodiphenylmethane sowie die 3,3',5,5'-Tetra-(C₁-C₄)-alkyl-4,4'-diphenylmethane, die 4,4'-Diaminodiphenyl-sulfide, -sulfoxide oder -sulfone, 2,4-Diaminobenzoesäureester nach DE-A 2 025 900, sowie durch eine oder zwei (C₁-C₄)-Alkylgruppen substituierte Toluylendiamine. Besonders bevorzugt sind 3,5-Diethyl-2,4- und/oder -2,6-diaminotoluol (besonders ihre technischen (80/20)- oder (65/35)-Isomerengemische), unsymmetrisch tetraalkylsubstituierte Diaminodiphenylmethane, z.B. 3,5-Diethyl-3'-5'-diisopropyl-4,4'-diaminodiphenylmethan und ihre Isomerengemische entsprechend DE-A 2 902 090, 4,4'-Diaminobenzanilid, sowie 3,5-Diaminobenzoesäure-(C₁-C₄)-alkylester, 4,4'- und/oder 2,4'-Diamino-diphenylmethan, sowie Naphthylen-1,5-diamin.

Niedermolekulare aliphatische Amin-Kettenverlängeren bzw. Stabilisatoren C können nur in den Mengen mitverwendet werden, wie sie als Stabilisatoren für die festen, pulverförmigen Polyisocyanate eingesetzt werden können. In höheren Konzentrationen, wie sie für echte Kettenverlängerer üblich sind, würden sie zu einer völligen Überstabilisierung, d.h. Desaktivierung des festen Polyisocyanats führen.

Gegebenenfalls können die üblichen Polyurethankatalysatoren, mit besonders gutem Effekt tertiäre Amine oder Metallkatalysatoren, verwendet werden.

Es sind dies z.B. tertiäre Amine, wie Triethylamin, Tributylamin, N,N,N',N'-Tetramethyl-ethylendiamin, 1,4-Diaza-bicyclo-(2,2,2)-octan, N,N-Dimethylbenzylamin, N,N-Dimethylcyclohexylamin.

Als organische Metallverbindungen kommen insbesondere organische Zinn-, Zink-, Blei-, Eisen- und Wismutverbindungen als Katalysatoren in Frage. Als organische Zinnverbindungen kommen vorzugsweise Zinn(II)-salze von Carbonsäuren wie Zinn(II)bis-ethylhexanoat und Zinn(II)-bis-stearat und die Dialkylzinnsalze von Carbonsäuren, wie z.B. Dibutylzinn-dilaurat und Dioctylzinndiacetat oder Zinn-Estermercaptide in Betracht. Als organische Zinkverbindungen kommen vorzugsweise Zink-bis-ethylhexanoat und Zink-bis-acetylacetonat in Betracht. Als organische Bleiverbindungen kommen vorzugsweise Blei(II)-salze von Carbonsäuren wie Blei(II)-naphthenat, Blei(II)bis-ethylhexanoat, Blei(II)-stearat, aber auch z.B. Blei(II)-bis-diethyldithiocarbamat in Betracht. Als organische Eisenverbindung kommt z.B. Eisen(III)-acetylacetonat, als organische Wismutverbindungen kommen vorzugsweise Wismut(III)-octoat und Wismut(III)-neodecanoat in Betracht.

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102, und in der DE-A 3 230 757 beschrieben.

Die Katalysatoren werden in der Regel in einer Menge zwischen etwa 0,001 und 10 Gew.-%, bezogen auf die Gesamtzusammensetzung, eingesetzt.

Als gegebenenfalls enthaltene Hilfs- und Zusatzstoffe seien genannt: Farbstoffe oder Pigmente, Füllstoffe wie Schwerspat, Kreide, Quarzmehl, Kieselgur, Silicagel, Fällungskieselsäuren, pyrogene Kieselsäuren, Gips, Talkum, Aktivkohle, Ruß, Metallpulver.

Es können ferner auch Reaktionsverzögerer, z.B. sauer reagierende Stoffe wie Salzsäure, organische Säurehalogenide oder organische Säuren, ferner Flammschutzmittel der an sich bekannten Art, z.B. Tris-chlorethylphosphat oder Ammoniumphosphat und -polyphosphat, sowie Stabilisatoren gegen Alterungs- und Witterungseinflüsse wie phenolische Antioxidantien und Lichtschutzmittel, Weichmacher und fungistatisch und/oder bakteriostatisch wirkende Substanzen mitverwendet werden.

Beispiele sowie Einzelheiten über Verwendungs- und Wirkungsweise dieser Zusatzmittel sind im Kunststoff-Handbuch, Band VI, herausgegeben von Vieweg und Höchtlen, Carl-Hanser-Verlag, München 1966, z.B. auf den Seiten 103 bis 113 und in DE-A-2 854 384 und 2 920 501 beschrieben.

Je nach Viskosität der Ausgangskomponenten und je nach Art und Menge der zugesetzten Füllstoffe erhält man bei Raumtemperatur mehr oder weniger viskose PUR-Reaktiv-Klebstoffmischungen. Diese Reaktiv-Klebstoffmischungen sind Suspensionen eines festen, durch Polyadduktumhüllung stabilisierten Polyisocyanats in der Polyol- und Polyamin-Komponente. Die Verfestigung dieser Mischungen erfolgt durch Erwärmung im dielektrischen Feld. Die Verarbeitung der erfindungsgemäßen Systeme richtet sich nach deren Beschaffenheit und der technischen Aufgabenstellung. Sie können z.B. mit der Hand oder über eine geeignete Auspreß- bzw. Fördereinrichtung, z.B. über eine Kartusche oder eine Rakel auf die zu verklebenden Werkstoffe, z.B. Artikel aus Glas, glasierter Keramik, oder Kunststoffen, die auch z.B. mit Glasfasern verstärkt sein können, aufgebracht werden.

Die Mengenangaben in den Beispielen beziehen sich, sofern nicht anders angegeben, auf Gewichtsteile.

### Beispiel 1

Zu einer Mischung aus 94 Teilen eines Polyoxypropylenoxyethylenethertriols vom Molekulargewicht 6000, 6 Teilen 2,4 (35 % 2,6)-Diamino-3,5-diethyltoluol, 0,2 Teilen 4,4'-Diamino-3,3'-dimethyldicyclohexylmethan, 0,2 Teilen Pb-Octoat (Octa Soligen Pb 24 der Firma Borchers) und 0,1 Teilen Ethylhexansäure werden 16 Teile einer Suspension von K-Alumosilikat mit 3 Å Porenweite in Rizinusöl (Baylith L-Paste der Firma Bayer AG) gegeben und die Mischung 1 Stunde bei 80°C im Wasserstrahlvakuum entgast. Man suspendiert nun nacheinander 4 Teile gecoatete pyrogene Kieselsäure (Aerosil R 202 der Firma Degussa), 15 Teile geocatetes mikronisiertes Talkum (Talk V 390 der Firma Naintsch, Graz), 10 Teile gecoatete Fällungskieselsäure (Sipernat D 17 der Firma Degussa) und 22,5 Teile dimerisiertes Toluylen-2,4-diisocyanat (Desmodur TT der Firma Bayer AG) homogen ein und gibt zuletzt 1,5 Teile γ-Aminopropyl-trimethoxysilan (Dynasylan (DAMO) der Firma Dynamit Nobel Chemie) hinzu. Nach 1/2 Stunde Entgasen bei 40°C erhält man eine thixotrope, chemisch lagerstabile Klebstoff-Suspension mit einer Aufdicktemperatur von 82°C. Ihre Härte nach Verfestigung bei 120°C beträgt 91 Shore A.

### Prüfung der Klebeeigenschaften

Als Prüfmaterial dienten Fügeteile aus einem mit 30 % Glasfasern verstärktem Polyesterharz der Abmessung 20 mm x 40 mm x 4 mm (SMC bzw. BMC). Als weiteres Prüfmaterial wurde neben dem glasfaserverstärkten Polyester auch Bayblend (Blend aus Poly-Hexandiolcarbonat und Acrylnitril-Butadien-Styrol-Copolymerisat) verwendet.

Nach Auftrag des Klebstoffs aus Beispiel 1 wurden zwei Fügeteilstreifen so zusammengelegt, daß eine überlappte Fläche von 10 x 20 mm und eine Klebefilmstärke von ca. 0,8 mm entstand. Die Probekörper wurden unter den unten angegebenen Bedingungen im dielektrischen Feld erwärmt und ausgehärtet.

### 1. Mikrowelle (2450 MHz)

Abbindecyclus: 3 Minuten im Mikrowellenofen bei 1600 W zum Erreichen einer Handhabungsfestigkeit (τ_{B} >0,25 MPa). Danach 20 min Nachtemperung bei 140°C.

Nach 24 h Lagerung der fertigverklebten SMC- bzw. Bayblend- Prüfkörper bei Raumtemperatur wurde die Scherzugfestigkeit in Anlehnung an DIN 53 283 bei einer Prüfgeschwindigkeit von 100 mm pro Minute ermittelt.

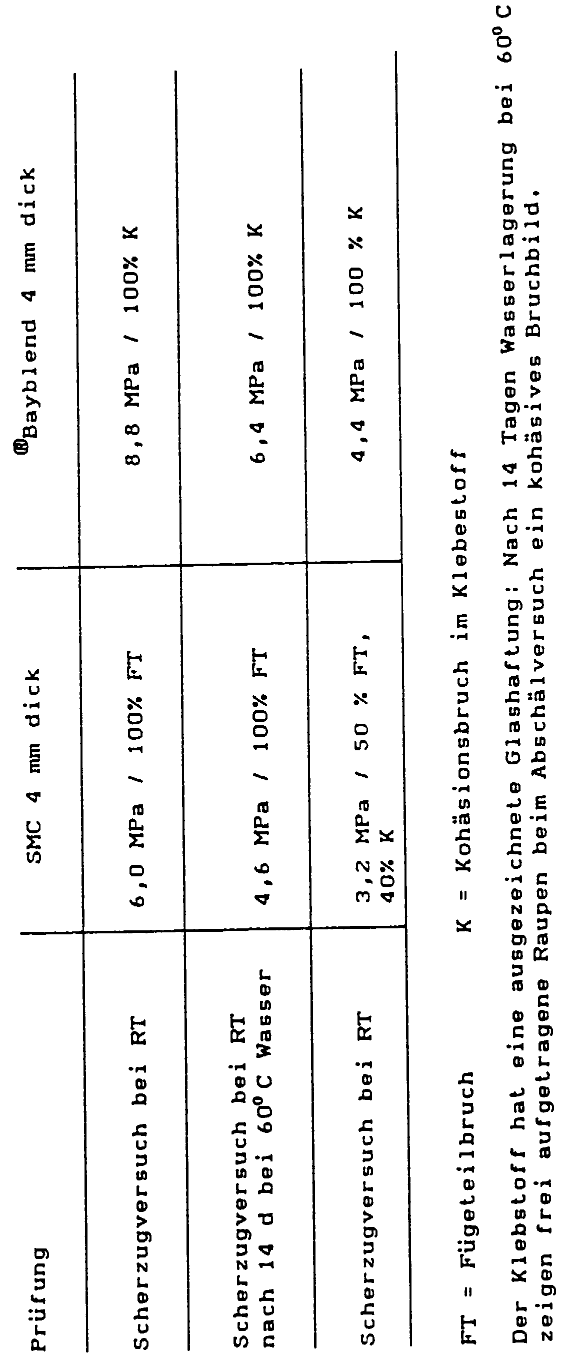

### 2. Hochfrequenz (27,12 MHz)

Der Klebstoff nach Beispiel 1 zeigte nach 30 sec HF-Behandlung Handhabungsfestigkeit (τ_{B} > 0,25 MPa). Die benötigte HF-Leistung war von der Dicke des verklebten BMC-Materials abhängig:

| Fügeteildicke | HF-Leistung | Dauer | Klebstoff-Temperatur |
|---|---|---|---|
| 3 mm | 600 W | 30 sec | 127°C |
| 4 mm | 800 W | 30 sec | 112°C |

Zum Vergleich zeigte ein gemäß DE-A 3 919 697, Beispiel 1 hergestellter Klebstoff bei 400 W erst nach 105 sec nach einer Erwärmung auf 120°C Handhabungsfestigkeit. Leistungen über 400 W führten schon nach wenigen Sekunden Einwirkungszeit zur thermischen Zerstörung des Klebstoffes.

### Beispiel 2

Zu einer Mischung aus 90 Teilen eines Polyoxypropylenoxyethylenethertriols vom Molekulargewicht 3000, 10 Teilen 2,4 (35 % 2,6)-Diamino-3,5-diethyltoluol, 0,54 Teilen 4,4'-Diamino-3,3'-dimethyldicyclohexylmethan, 0,2 Teilen Pb-Octoat und 0,1 Teilen Ethylhexansäure werden 12 Teile Baylith L-Paste gegeben und die Mischung 1 Stunde bei 80°C im Wasserstrahlvakuum entgast. Man suspendiert nun nacheinander 20 Teile mikronisiertes Talkum (10 MO der Firma Grolmann, Düsseldorf), 6 Teile gecoatete Fällkreide (Socal 312 N der Firma Solvay), 4 Teile Titandioxid RKB2 der Firma Kronos Titan, Leverkusen und 30,38 Teile Desmodur TT homogen ein. Nach 1/2 Stunde Entgasen bei 40°C erhalt man eine chemisch lagerstabile, niedrigviskose, flüssige Vergußmasse mit einer Aufdicktemperatur von 74°C und einer Viskosität von 6000 mPa.s bei 23°C. Ihre Härte nach Verfestigung bei 120°C beträgt 96 Shore A.

Sie läßt sich genau wie der Klebstoff aus Beispiel 1 durch Mikrowellen- oder Hochfrequenz-Einwirkung zur Verfestigung bringen.

## Patentansprüche

1. Reaktivklebstoffe auf Polyurethanbasis, enthaltend jeweils wenigstens ein stabilisiertes Polyisocyanat A ausgewählt aus der Gruppe 1,5-Naphthalin-diisocyanat, dimeres, 4,4'-Diisocyanatodiphenylmethan, dimeres 2,4-Diisocyanatotoluol, 3,3'-Diisocyanato-4,4'-dimethyl-N,N'-diphenylharnstoff und N,N'-Bis-[4-(4- oder 2-isocyanatophenylmethyl)-phenyl]-harnstoff, wenigstens ein Polyol B, das mindestens zwei Hydroxylgruppen aufweist und aus der Gruppe Polyester, Polyether, Polythioether, Polyacetale, Polycarbonate, Polyesteramide, Rizinusöl, Kohlenhydrate, Stärke, hochmolekulare Polyhydroxylverbindungen enthaltend Polyaddukte aus Formaldehyd, Phenolen und/oder Aminen oder Umsetzungsprodukte von Polyisocyanaten und aminofunktionellen Verbindungen oder Vinylpolymerisate ausgewählt ist, und wenigstens ein nicht-aromatisches Polyamin C ausgewählt aus der Gruppe Ethylendiamin, 1-Amino-3,3,5-trimethyl-5-aminomethyl-cyclohexan, 3,3'-Dimethyl-4,4'-diaminodicyclohexylmethan, Diethylentriamin, Methylnonandiamin, Polyoxypropylenethertriamin vom mittleren Molekulargewicht 403, sowie gegebenenfalls übliche Zusatzstoffe, dadurch gekennzeichnet, daß der zahlenmäßige Mittelwert des Äquivalentgewichts aller beteiligten Polyole und Polyamine mindestens 500 beträgt.

2. Verfahren zur Herstellung von Verklebungen unter Verwendung von Klebstoffen gemäß Anspruch 1, dadurch gekennzeichnet, daß der Klebstoff mittels eines hochfrequenten elektrischen Wechselfeldes abgebunden wird.

3. Verfahren gemäß Anspruch 2, dadurch gekennzeichnet, daß der Klebstoff durch Mikrowellen abgebunden wird.

## Claims

1. Polyurethane-based reactive adhesives containing in each case at least one stabilised polyisocyanate A chosen from the group comprising 1,5-naphthalene diisocyanate, dimeric 4,4'-diisocyanatodiphenylmethane, dimeric 2,4-diisocyanatotoluene, 3,3'-diisocyanato-4,4'-dimethyl-N,N'-diphenylurea and N,N'-bis-[4-(4- or 2-isocyanatophenylmethyl)-phenyl] urea, at least one polyol B which has at least two hydroxyl groups and is chosen from the group comprising polyesters, polyethers, polythioethers, polyacetals, polycarbonates, polyesteramides, castor oil, carbohydrates, starch, high molecular weight polyhydroxyl compounds containing polyadducts of formaldehyde, phenols and/or amines or reaction products of polyisocyanates and amino-functional compounds or vinyl polymers, and at least one non-aromatic polyamine C chosen from the group comprising ethylene diamine, 1-amino-3,3,5-trimethyl-5-aminomethyl-cyclohexane, 3,3'-dimethyl-4,4'-diamino-dicyclohexylmethane, diethylene triamine, methyl nonane diamine, polyoxypropylene ether triamine with an average molecular weight of 403, and optionally conventional additives, characterised in that the numerical average of the equivalent Weight of all the polyols and polyamines concerned is at least 500.

2. A process for the preparation of bonds using adhesives according to claim 1, characterised in that the adhesive is cured by means of a high-frequency electrical alternating field.

3. A process according to claim 2, characterised in that the adhesive is cured by microwaves.

## Revendications

1. Colles réactives à base de polyuréthane, contenant au moins un polyisocyanate A stabilisé, sélectionné dans le groupe constitué par le 1,5-naphtalène-diisocyanate, le 4,4'-diisocyanatodiphénylméthane dimère, le 2,4-diisocyanatotoluène dimère, la 3,3'-diisocyanato-4,4'-diméthyl-N,N'-diphénylurée et la N-N'-bis-[4-(4- ou 2-isocyanatophénylméthyl)-phényl]-urée, au moins un polyol B présentant au moins deux groupements hydroxyle, sélectionné dans le groupe des polyesters, des polyéthers, des polythioéthers, des polyacétals, des polycarbonates, des polyesteramides, de l'huile de ricin, des hydrates de carbone, de l'amidon, des composés polyhydroxyle à masse moléculaire élevée contenant des produits de polyaddition de formaldéhyde, de phénols et/ou d'amines ou des produits de réaction de polyisocyanates et de composés à fonction amine ou de polymères vinyliques, et au moins une polyamine non aromatique C sélectionnée dans le groupe constitué par l'éthylènediaminc, le 1-amino-3,3,5-triméthyl-5-aminométhylcyclohexane, le 3,3'-diméthyl-4,4'-diaminodicyclohexylméthane, la diéthylènetriamine, la méthylnonanediamine, la polyoxypropylèneéthertriamine de masse moléculaire moyenne égale à 403, ainsi que le cas échéant des additifs usuels, caractérisées en ce que la moyenne numérique du poids équivalent de tous les polyols et polyamines impliqués est au moins de 500.

2. Procédé de production de collages par utilisation de colles selon la revendication 1, caractérisé en ce qu'on fait prendre la colle au moyen d'un champ alternatif électrique haute fréquence.

3. Procédé selon la revendication 2, caractérisé en ce qu'on fait prendre la colle par micro-ondes.
